## Europäisches Patentamt

## European Patent Office

## Office européen des brevets

(11) Veröffentlichungsnummer: **0 163 878**
**A2**

(12) **EUROPÄISCHE PATENTANMELDUNG**

(21) Anmeldenummer: **85104708.4**

(22) Anmeldetag: **18.04.85**

(51) Int. Cl.⁴: **D 06 F 43/08**, B 01 D 29/38

(30) Priorität: 07.05.84 DE 3416739
21.05.84 DE 3418834

(43) Veröffentlichungstag der Anmeldung: **11.12.85**
**Patentblatt 85/50**

(84) Benannte Vertragsstaaten: **FR GB IT NL**

(71) Anmelder: **Multimatic Maschinen GmbH. & Co.,**
**Bismarckstrasse 4-10, D-4520 Melle (DE)**

(72) Erfinder: **Kötter, Gustav, Meller Berg 44,**
**D-4520 Melle 1 (DE)**
Erfinder: **Mutscheiknaus, Peter, Dipl.-Ing.,**
**Mühlenstrasse 6, D-4520 Melle (DE)**

(74) Vertreter: **Lorenz, Eduard et al, Rechtsanwälte Eduard**
**Lorenz - Bernhard Seidler Margrit Seidler - Dipl.-Ing.**
**Hans-K. Gossel Dr. Ina Phillpps - Dr. Paul B. Schäuble Dr.**
**Siegfried Jackermeler,**
**Widenmayerstrasse 23 D-8000 München 22 (DE)**

(54) **Nadelfänger für eine Chemischreinigungsmaschine.**

(57) In der das verschmutzte Lösemittel von der Wasch-trommel abführenden Leitung einer Chemischreinigungs-maschine ist ein Nadelfänger angeordnet, der mit einem in einem Filtergehäuse angeordneten, sich über den Durchtrittsquerschnitt erstreckenden zylindrisch gekrümmten Sieb versehen ist. Die konkav gekrümmte Seite dieses Sie-bes wird von dem Lösemittel angeströmt. Um das Sieb einfach, gründlich und ohne Betriebsunterbrechung reini-gen zu können, ist um eine im Bereich der Krümmungsachse des Siebes angeordnete Schwenkachse (23) ein mit einem Schwenkantrieb (26) versehener Hebel (24) gelagert, der an seinem freien Ende eine sich etwa über die Siebbreite erstreckende Saugdüse (25) trägt. Die Saugdüse (25) ist über die konkave Siebseite in geringem Abstand von dieser bewegbar und über Leitungen (27, 29) mit einem Flüssig-keitsabscheider (30) verbunden. Der Flüssigkeitsabschei-der (30) ist an eine Saugluftquelle (18) angeschlossen und mit einem herausnehmbaren Siebkorb (39) und im Bereich seines Bodens mit einer Leitung zum Abzug mitgerissenen Lösemittels versehen.

0163878

02.04.1985
79 578  G/lü

Multimatic Maschinen GmbH & Co.,
4520 Melle

---

## Nadelfänger für eine Chemischreinigungsmaschine

---

Die Erfindung betrifft einen Nadelfänger, der in der das verschmutzte Lösemittel von der Waschtrommel abführenden Leitung
einer Chemischreinigungsmaschine angeordnet ist, mit einem in
einem Filtergehäuse angeordneten, sich über den Durchtrittsquerschnitt erstreckenden, zylindrisch gekrümmten Sieb, dessen
konkav gekrümmte Seite die Anströmseite für das Lösemittel ist.

Das aus der Waschtrommel einer Chemischreinigungsmaschine abgepumpte verschmutzte Lösemittel enthält häufig feste Bestandteile, die durch Aussieben oder Filtrieren entfernt werden müssen, um die Lösemittelpumpe zu schützen. Dieses Aussieben der festen Bestandteile geschieht in dem sogenannten Nadelfänger, der aus einem Gehäuse besteht, das in seinem unteren Bereich mit einem Siebeinsatz versehen ist. Dieser Siebeinsatz muß von Zeit zu Zeit gereinigt werden, was üblicherweise mit einem erheblichen Aufwand verbunden ist und zu Betriebsunterbrechungen führen kann.

Aus der DE-OS 32 18 109 ist eine Filtervorrichtung der eingangs angegebenen Art mit einem zylindrischen senkrechtstehenden Sieb bekannt, in dessen Achse ein Sprührohr mit radialen Düsen drehbar angeordnet ist. Zur Reinigung dieser Filteranordnung wird das Filtergehäuse bodenseitig geöffnet und mit einer Waschflüssigkeit wird die innere Siebfläche angesprüht, wobei sich jedoch nicht vermeiden läßt, daß kleinere Partikel in die Maschen des Siebes hineingedrückt werden und dieses verstopfen kann. Die bekannte Siebvorrichtung macht zu ihrer Reinigung nicht nur Betriebsunterbrechungen notwendig, darüber hinaus ist eine vollständige Reinigung der Maschen des Siebes auch nicht gewährleistet.

Aufgabe der Erfindung ist es daher, eine Reinigungsvorrichtung für einen Nadelfänger der eingangs angegebenen Art zu schaffen, mit der sich das Nadelfängersieb einfach, gründlich und ohne Betriebsunterbrechung reinigen läßt.

Erfindungsgemäß wird diese Aufgabe dadurch gelöst, daß das Sieb derart zylindrisch gekrümmt ist, daß dessen Anströmseite konkav ist, daß um eine im Bereich der Krümmungsachse des Siebes angeordnete Schwenkachse ein mit einem Schwenkantrieb versehener Hebel gelagert ist, der an seinem freien Ende eine sich etwa über die Siebbreite erstreckende Saugdüse trägt, die über die konkave Siebseite im geringen Abstand von dieser bewegbar ist, daß die Saugdüse über einen Schlauch und gegebenenfalls Rohre unter Zwischenschaltung eines Abscheiders mit einer Saugluftquelle verbunden ist und daß der Abscheider mit einem herausnehmbaren Siebkorb und im Bereich seines Bodens mit einer Leitung zum Abzug des mitgerissenen Lösemittels versehen ist. Die
erfindungsgemäße Reinigungsvorrichtung läßt sich automatisch bei
jedem Ablauf des Lösemittels aus dem Nadelfänger über die Steuerung der Maschine oder über eine Steuerung mit Programmkarte
in Betrieb setzen. Das verschmutzte Nadelfängersieb wird durch
einfaches Absaugen gereinigt, wobei die ausgesiebten Teilchen
in einem Siebkorb gesammelt werden, der sich in einfacher Weise
entnehmen, entleeren und gegebenenfalls reinigen läßt.

Aus der US-PS 20 66 479 ist eine Filtervorrichtung mit einem
stehenden kegelstumpfförmigen Sieb bekannt, dessen innere Mantelfläche von einer um die Kegelstumpfachse drehbaren und sich über
die Höhe des Siebes erstreckenden Saugdüse überstrichen wird.
Dabei wird die zu filternde Flüssigkeit durch den Flüssigkeitsdruck selbst in die Saugdüse gedrückt oder die Saugdüse ist an
eine Flüssigkeitspumpe angeschlossen.

Der in der Saugleitung angeordnete Abscheider besteht zweckmäßigerweise aus einem Zentrifugalabscheider, in den das angesaugte
Lösemittel-Luft-Gemisch tangential eingeleitet wird.

Zweckmäßigerweise ist zwischen der mit dem Siebgehäuse verbundenen Saugleitung und dem Siebgehäuse eine Bypass-Leitung angeordnet, die der Belüftung der Saugleitung dient und die Menge des
mitgerissenen Lösemittels verringert.

In weiterer Ausgestaltung der Erfindung ist vorgesehen, daß von
der die Saugluftquelle bildenden Saugpumpe die Druckseite über
eine Leitung in das Siebgehäuse mündet.

Der Schwenkantrieb des die Saugdüse verschwenkenden Hebels besteht zweckmäßigerweise aus einer um die Querachse eines
Zylinders drehbar gelagerten Scheibe, die an gegenüberliegenden
Enden mit Kulissenführungen versehen ist, in denen Gleitsteine
zweier in dem Zylinder durch Druckluft gegenläufig bewegbarer
Kolben geführt sind. Ein derartiger Schwenkantrieb ist unter der
Bezeichnung "Rotadisk" im Handel.

Weitere vorteilhafte Ausgestaltungen der Erfindung sind Gegenstand der Unteransprüche.

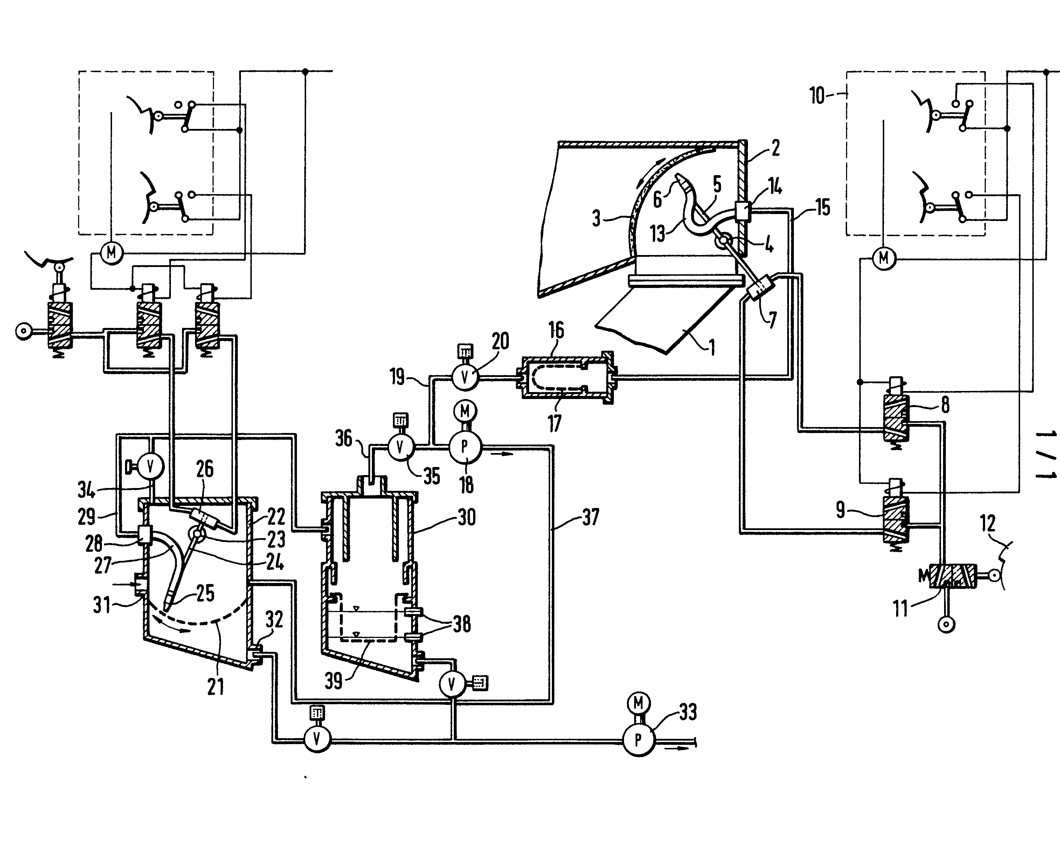

Ein Ausführungsbeispiel der Erfindung wird nachstehend anhand
der Zeichnung, in deren einziger Figur die Reinigungsvorrichtungen für den Flusenfilter und den Nadelfänger schematisch dargestellt sind, näher erläutert.

In der die Trocknungsluft führenden Leitung 1 einer Chemischreinigungsmaschine, die die mit Lösemitteldampf, Flusen oder
dergleichen beladene Trocknungsluft zu den Einrichtungen zur
Rückgewinnung des Lösemittels und zum Erwärmen führt, ist das
Gehäuse 2 angeordnet, das den Flusenfilter 3 enthält. Der Flusenfilter 3 ist in dem Filtergehäuse 2 herausnehmbar befestigt und
besteht aus einer Edelstahlgaze mit einer Maschenweite von 30
µm. Der Flusenfilter 3 deckt den Gehäusequerschnitt vollständig
ab und ist etwa über einen Viertelkreis um die Schwenkachse 4
des Hebels 5 zylindrisch gewölbt. Der Hebel 5 trägt an seinem
freien Ende eine aus einer Breitschlitzdüse bestehende Saugdüse
6. Diese Saugdüse läßt sich durch Verschwenken des Hebels 5
durch einen Schwenkantrieb 7 in geringem Abstand über die konkave Seite des zylindrisch gewölbten Flusenfilters 3 bewegen.

Der Schwenkantrieb 7 verdreht eine in der Schwenkachse 4 gelagerte Welle, auf die der Hebel 5 befestigt ist. Der Schwenkantrieb
7 besteht aus einem pneumatischen Kolbentrieb, der vereinfacht
durch eine an einem den Hebel 5 verlängernden Hebel angreifende

Kolbenzylindereinheit dargestellt ist.

Zur Beaufschlagung der jeweiligen Seite der Druckmittelkolbenzylindereinheit mit Druckluft sind 3/2-Wegeventile 8, 9 vorgesehen, die als Magnetventile ausgebildet sind und von dem
Programmwalzengeber 19 der Chemischreinigungsmaschine gesteuert
werden. Die Druckluft wird den Magnetventilen 8, 9 über das
3/2-Wegeventil 11 zugeführt, das ebenfalls durch eine Steuerwalze 12 betätigt wird.

Die Saugluftdüse 6 ist durch einen flexiblen Schlauch 13 mit
einem Anschlußstutzen 14 verbunden, der in einem Deckel des
Gehäuses 2 angeordnet ist. Von dem Anschlußstutzen 14 führt eine
Saugleitung 15 zu dem zylindrischen Gehäuse 16, in dem ein Filtersack 17 gehaltert ist. Dieser Filtersack 17 läßt sich durch
Abnehmen des Deckels von dem Gehäuse 16 herausnehmen, reinigen
oder durch einen neuen ersetzen.

Das andere Ende des Filtersackgehäuses 16 ist mit der Saugseite
der Saugpumpe 18 verbunden. In der Saugleitung 19 zwischen dem
Gehäuse 16 und der Saugpumpe 18 ist das Ventil 20 angeordnet,
mit dem sich die Saugleitung 19 schließen und die Saugdüse 6 von
der Saugpumpe 18 trennen läßt.

Das verschmutzte Lösemittel wird über eine Leitung von der
Waschtrommel in einen Tank geleitet, von dem aus es zur Reinigung der Destillierblase zugeführt wird. Da das verschmutzte
Lösemittel feste Bestandteile enthält, wird es über ein Nadelfängersieb geführt. Dieses Nadelfängersieb 21 ist in dem Siebgehäuse 22 gehaltert und besteht aus einer zylindrisch gewölbten
Siebfolie 21. Diese Siebfolie 21 erstreckt sich über den Querschnitt des senkrecht stehenden Siebgehäuses 22 und ist im Querschnitt etwa viertelkreisförmig. Auf einer um die Schwenkachse
23 im Siebgehäuse 22 schwenkbar gelagerten Welle ist der Schwenkhebel 24 befestigt, der an seinem vorderen Ende eine mit einem breiten Schlitz versehene Saugdüse 25 trägt. Durch hin- und hergehende Verschwenkung des Hebels 24 durch einen die Druckmittelkolbenzylindereinheit 26 enthaltenden Antrieb läßt sich die Saugdüse 25 in dichtem Abstand über die konkave Seite der Siebfolie 21 bewegen. Der Schwenkantrieb ist in gleicher Weise wie bei dem Flusenfilter mit der den Hebel 24 verschwenkenden Welle verbunden.

Die Saugdüse 25 ist durch einen flexiblen Schlauch 27 mit einem Anschlußstutzen 28 verbunden, der in der Wandung des Siebgehäuses 22 angeordnet ist. Von dem Anschlußstutzen 28 führt eine Leitung 29 zu dem Zentrifugalabscheider 30. Weiterhin ist das Siebgehäuse 22 mit einem Anschlußstutzen 31 für die das Lösemittel zuführende Leitung versehen. Am unteren Ende des Siebgehäuses 22 befindet sich der Auslaufstutzen 32, durch den durch die Lösemittelpumpe 33 das verschmutzte Lösemittel abgepumpt wird.

Die Saugleitung 29 ist über eine ein Ventil enthaltende Bypass-Leitung 34 mit dem Siebgehäuse 22 verbunden, durch die die Saugleitung belüftet und damit die mitgerissene Lösemittelmenge reduziert wird.

Das Gehäuse des Zentrifugalabscheiders 30 ist durch die das Ventil 35 enthaltende Saugleitung 36 mit der Saugpumpe 18 verbunden. Die Druckseite der Saugpumpe 18 kann während des Absaugens der Siebfolie 21 durch die Leitung 37 mit dem Siebgehäuse 22 zweckmäßigerweise oberhalb des Lösemittelspiegels verbunden sein.

Über die Saugleitung 29 wird das Lösemittel-Luft-Gemisch etwa tangential in den Zentrifugalabscheider 30 eingeleitet. Durch die Fliehkraft trennt sich die Luft schnell von dem Lösemittel.

0163878

Das Lösemittel sammelt sich im unteren Bereich des Gehäuses des Zentrifugalabscheiders, in dem der Lösemittelspiegel durch die Niveausteuerung 38 überwacht wird. In das Gehäuse des Zentrifugalabscheiders 30 ist ein Siebkorb 39 eingesetzt, der sich nach Bedarf herausnehmen und reinigen läßt.

Die Steuerung des Antriebes des die Saugdüse 25 verschwenkenden Hebels 24 entspricht der bereits beschriebenen des Flusenfilters, so daß diese nicht erneut erläutert wird.

Da bei einer Chemischreinigungsmaschine der Flusenfilter und der Nadelfänger nicht gleichzeitig arbeiten, genügt für die Saugdüsen 6 und 25 des Flusenfilters und des Nadelfängers eine gemeinsame Vakuumpumpe 18, die durch die Ventile 20, 35 auf die jeweiligen Kreisläufe umgeschaltet wird.

02.04.1985
79 578  G/lü

Multimatic Maschinen GmbH & Co.,
4520 Melle

Nadelfänger für eine Chemischreinigungsmaschine

**Patentansprüche:**

1.  Nadelfänger, der in der das verschmutzte Lösemittel von der
    Waschtrommel abführenden Leitung einer Chemischreinigungsmaschine angeordnet ist, mit einem in einem Filtergehäuse
    angeordneten, sich über den Durchtrittsquerschnitt erstreckenden zylindrisch gekrümmten Sieb, dessen konkav
    gekrümmte Seite die Anströmseite für das Lösemittel ist,
    **dadurch gekennzeichnet,** daß um eine im Bereich der
    Krümmungsachse des Siebes angeordnete Schwenkachse (23) ein
    mit einem Schwenkantrieb (26) versehener Hebel (24) gela-

0163878

gert ist, der an seinem freien Ende eine sich etwa über die Siebbreite erstreckende Saugdüse (25) trägt, die über die konkave Siebseite im geringen Abstand von dieser bewegbar ist, daß die Saugdüse (25) über Leitungen (27, 29) mit einem Flüssigkeitsabscheider (30) verbunden ist, der an eine Saugluftquelle (18) angeschlossen ist, und daß der Abscheider (30) mit einem herausnehmbaren Siebkorb (39) und im Bereich seines Bodens mit einer Leitung zum Abzug mitgerissenen Lösemittels versehen ist.

2. Nadelfänger nach Anspruch 1, dadurch gekennzeichnet, daß der Abscheider (30) aus einem Zentrifugalabscheider besteht, in den das angesaugte Lösemittel-Luft-Gemisch tangential eingeleitet wird.

3. Nadelfänger nach Anspruch 1 oder 2, dadurch gekennzeichnet, daß zwischen der mit dem Siebgehäuse (22) verbundenen Saugleitung (29) und dem Siebgehäuse (22) eine Bypass-Leitung (34) angeordnet ist.

4. Nadelfänger nach einem der Ansprüche 1 bis 3, dadurch gekennzeichnet, daß von der die Saugquelle bildenden Saugpumpe (18) die Druckseite über eine Leitung (37) in das Sieggehäuse (22) mündet.

5. Nadelfänger nach einem der Ansprüche 1 bis 4, dadurch gekenzeichnet, daß der Schwenkantrieb des die Saugdüse (25) verschwenkenden Hebels (24) aus einer um die Querachse

eines Zylinders drehbar gelagerten Scheibe besteht, die an gegenüberliegenden Enden mit Kulissenführungen versehen ist, in denen die Gleitsteine zweier in dem Zylinder durch Druckluft gegenläufig bewegbarer Kolben geführt sind.

6. Nadelfänger nach einem der Ansprüche 1 bis 4, dadurch gekennzeichnet, daß die Saugdüse (25) aus einer Breitschlitzdüse besteht.

7. Nadelfänger nach einem der Ansprüche 1 bis 6, dadurch gekennzeichnet, daß die Saugdüse (25) mit einem Saugstutzen (28) der Gehäusewand durch einen Schlauch (27) verbunden ist.

0163878